# EUROPEAN PATENT APPLICATION

(11) **EP 3 402 138 A1**
(43) Date of publication of application: **14.11.2018**
(21) Application number: 16883925.6
(22) Date of filing: 01.02.2016
(51) Int. Cl.: H04L 12/66, H04L 12/28

(54) **INTEGRATED GATEWAY APPARATUS FOR IMPLEMENTING SMART HOME**

(30) Priority: 08.01.2016 KR 20160002451
(71) Applicant: Dinnoplus Co., Ltd., Seoul 06097 (KR)
(72) Inventor: CHEONG, Chane Ui, Yongin-si Gyeonggi-do 16836 (KR); CHOI, Seung Jin, Seoul 01212 (KR)
(74) Representative: Müller Verweyen
(86) International application number: PCT/KR2016/001052
(87) International publication number: WO 2017/119539

(57) **Abstract**

The present invention relates to an integrated gateway apparatus for implementing a smart home which can interwork with a TV to allow the TV to display a screen including a moving image or a photograph, allow configuration and control of a gateway on a TV screen, and allow the provision of various services, and implements an integrated gateway apparatus for implementing a smart home, the apparatus comprising an integrated gateway for: serving as an intermediary for a connection among a service server, a wired Internet of things device, a wireless Internet of things device, and a personal computer (PC) through an Internet; communicating with a wireless device through a wireless communication module; communicating with a wired device through a wired communication module; and decoding data received from the Internet or wired/wireless device and transmitting the decoded data to an interworking TV, wherein the integrated gateway comprises a TV interworking module for allowing an interworking of the TV that displays the received data on a screen and provides a user interface (UI)/user experience (UX) on the screen.

## Description

### [Technical Field]

The present invention relates to an integrated gateway apparatus for implementing a smart home, more particularly, to an integrated gateway apparatus for implementing a smart home, which can interwork with a TV to display a screen including a moving image or a photograph on the TV and to provide setting and control of a gateway and various services on a TV screen.

### [Background Art]

Recently, a smart home technology, which is a technology for controlling all devices provided in a home including home appliances by connecting the devices, has been proposed.

The smart home technology refers to a technique for monitoring and controlling all devices of various fields including home appliances (TV, air conditioner, refrigerator, and the like) and energy consumption devices (water supply, electricity supply, cooling and heating devices and the like) as well as security devices (door locks, surveillance cameras, and the like) by connecting the devices through a network. The devices used in the smart home technology can be operated automatically or can be remote-controlled according to the characteristics of the user.

In order to control all devices provided in a home by connecting the all devices in a smart home, a gateway or a wired/wireless router, which connects a control server with all control devices provided in the home through a network, is used.

When the smart home is implemented by using a gateway or a wired/wireless router, since the gateway or the wired/wireless router has no screen display function, the gateway or the wired/wireless router can be set and controlled only when a PC or a notebook is connected to the gateway or the wired/wireless router through the Internet.

Meanwhile, related arts for a smart home system are disclosed in following Patent Document 1 (Korean Unexamined Patent Publication No. 10-2013-0080278, published on July 12, 2013) and Patent Document 2 (Korean Patent Publication No. 10-1037397, issued on May 30, 2011).

The related art disclosed in Patent Document 1 includes an IR relay server having a server communication unit which can make data communication with a smart phone through a wireless communication network such as Wi-Fi, and an infrared transmitting unit for generating and transmitting an infrared signal for controlling a digital device. The IR relay server receives an image from at least one camera capable of photographing an indoor image at an office or home to transmit the image to a smart phone, and receives a digital device driving signal transmitted from the smart phone to generate and transmit an infrared signal corresponding to the digital device driving signal, thereby implementing a home automation system, which can control a plurality of digital devices provided in an indoor space from the outside, with a low cost and simple equipment.

The related art disclosed in Patent Document 2 is a digital device control system using a smart phone, which includes a smart phone having an application of a remote control function, a digital device of which on/off of a power supply, channel or volume is controlled according to a signal received from the smart phone, and a central control unit connected to the smart phone through Bluetooth or Wi-Fi communication and connected to the digital device through a plurality of infrared ray communications in order to remotely control the digital device, and therefore, the digital device can be controlled by using the smart phone instead of a remote controller.

### [Disclosure]

### [Technical Problem]

However, the gateway or the wired/wireless router for implementing the smart home system according to the related art has no screen display function, so that the gateway or the wired/wireless router has to be connected to a PC or a notebook through an Internet in order to set and control the gateway or the wired/wireless router.

In addition, since the conventional gateway or wired/wireless router has no screen display function, the conventional gateway or wired/wireless router cannot provide services and only transmits image data through the Internet by using a display device, such as a set-top box.

Further, when a smart home is implemented by using a conventional wall pad and a local server, there is a disadvantage in that a new home network device cannot be added to the wall pad and the local server installed in a main house when the home network device is newly added. For example, since the wall pad is installed in a built-in type, there is no way to physically connect the new home network device to the wall pad, and software that can drive the new home network device cannot be installed in the wall pad.

Accordingly, the present invention has been made to solve the above-mentioned problems occurring in the related art, and it is an object of the present invention to provide an integrated gateway apparatus for implementing a smart home, which can interwork with a TV to display a screen including a moving image or a photograph on the TV and to provide setting and control of a gateway and various services on a TV screen.

Another object of the present invention is to provide an integrated gateway apparatus for implementing a smart home in which, when a user newly purchases a home network device, installation and control of the new home network device can be conveniently performed by using an integrated gateway.

It is another object of the present invention to provide an integrated gateway apparatus for implementing a smart home, which can update software for controlling a newly installed home network device to an integrated gateway through a TV from a remote place.

### [Technical Solution]

In order to accomplish the above objects, there is provided an integrated gateway apparatus for implementing a smart home, the integrated gateway apparatus including: an integrated gateway that serves as an intermediary for a connection among a service server, a wired Internet of things (IoT) device, a wireless IoT device, and a personal computer (PC) through an Internet; communicates with a wireless device through a wireless communication module; communicates with a wired device through a wired communication module; and decodes data received from the Internet or a wired/wireless device and transmits the decoded data to an interworking TV, wherein the integrated gateway comprises a TV interworking module for allowing an interworking of a TV that displays the received data on a screen and provides a user interface (UI)/user experience (UX) on the screen.

The integrated gateway may include a wired/wireless router module that connects a single wide area network (WAN) port to a plurality of local area network (LAN) ports, provides the plurality of LAN ports for physically connecting a plurality of computers with each other, and makes connection to a short-range wireless communication by using an access point (AP) function.

The integrated gateway may include an IoT standard platform that performs an IoT function based on an open IoT standard, supports a wired IoT function through an Ethernet and a short-range wireless IoT function, and interworks with the TV interworking module to check an operational state of wired/wireless IoT devices and to change a setting of the wired/wireless IoT devices.

The integrated gateway may include a home network interworking module for controlling a home network device installed in a main house by communicating with a local server through the Internet, and connecting a new home network device to the integrated gateway.

The integrated gateway may include a healthcare module that applies a Bluetooth health device profile (HDP) of an ISO/IEEE 11073 international standard to a built-in Bluetooth module to perform standard-based wireless communication with a healthcare device and to perform wired communication with a wired healthcare device through a USB port to acquire health information.

The integrated gateway may include a smart grid module that supports a smart grid function by applying a smart energy profile (SEP) to a built-in ZigBee module, checks in real time a power consumption of home appliances in a main house through the TV, and automatically transmits the power consumption of the home appliances to the service server to analyze the power consumption of a user.

The integrated gateway may include a wireless communication module for communicating with the wireless device through short-range wireless communication; and a USB port and an RS-485 module for communicating with the wired device connected through a wired connection.

### [Advantageous Effects]

According to the present invention, the integrated gateway apparatus can interwork with a TV to display a screen including a moving image or a photograph on the TV and to provide setting and control of a gateway and various services on a TV screen.

According to the present invention, when a user newly purchases a home network device, installation and control of the new home network device can be conveniently performed by using an integrated gateway.

In addition, according to the present invention, software for controlling a newly installed home network device can be updated to an integrated gateway through a TV from a remote place.

### [Description of Drawings]

FIG. 1 is a view showing an overall configuration of an integrated gateway apparatus for implementing a smart home according to an exemplary embodiment of the present invention.
FIG. 2 is a block diagram showing an integrated gateway apparatus for implementing a smart home according to an exemplary embodiment of the present invention.

### [Modes of the Invention]

Hereinafter, an integrated gateway apparatus for implementing a smart home according to an exemplary embodiment of the present invention will be described in detail with reference to the accompanying drawings.

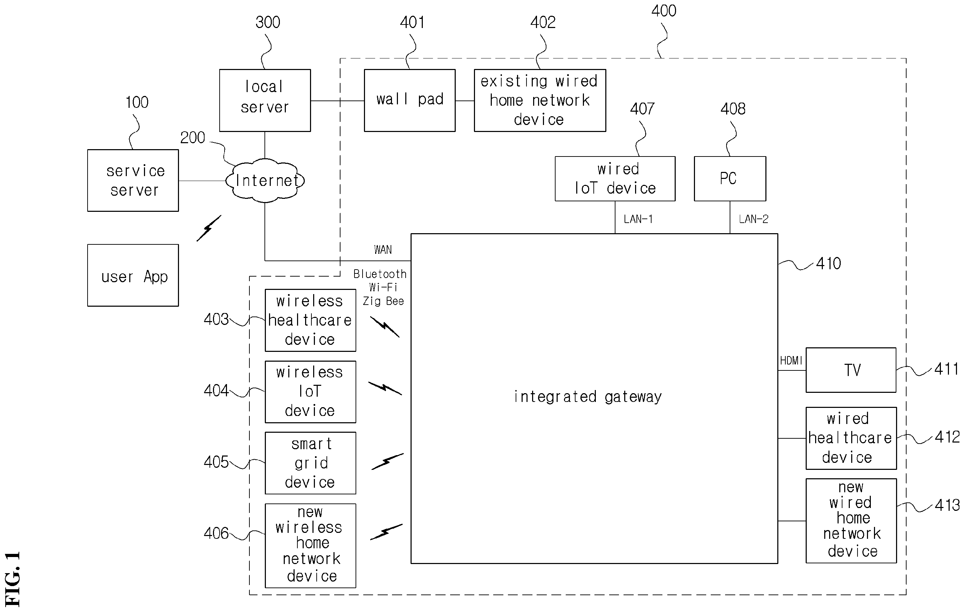

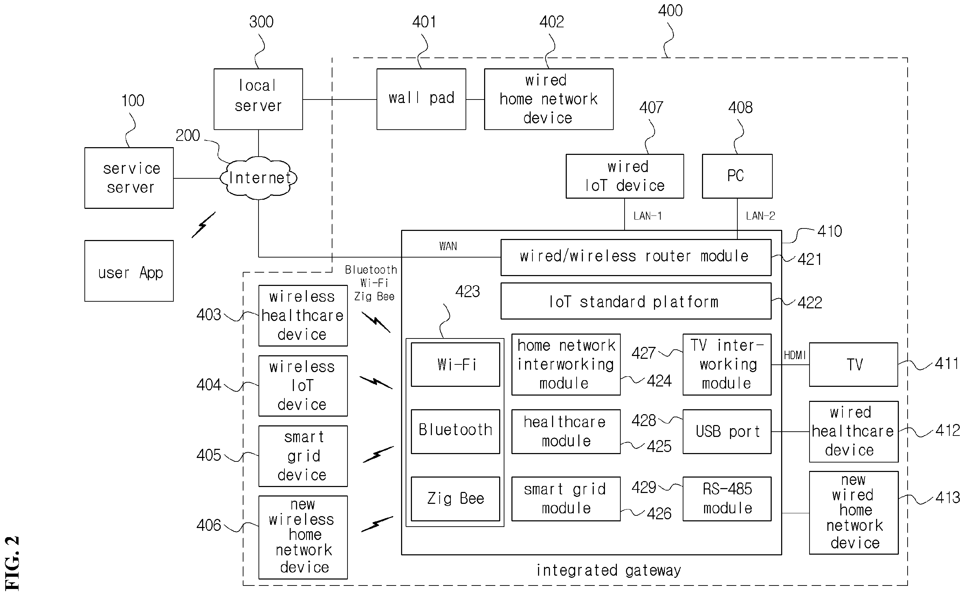

FIG. 1 is a view showing an overall configuration of an integrated gateway apparatus for implementing a smart home according to an exemplary embodiment of the present invention, and FIG. 2 is a block diagram showing an integrated gateway apparatus for implementing a smart home according to an exemplary embodiment of the present invention.

The present invention relates to a smart home system for controlling the operation of a plurality of digital home network devices such as a camera, a television, an audio device, a lighting device, and an air conditioner installed in an indoor space of a home or an office, capable of conveniently installing, controlling, and checking the home network devices through an Internet by interworking with a TV without connection to a display device such as a set-top box.

The integrated gateway apparatus 400 for implementing a smart home according to an exemplary embodiment of the present invention includes a wall pad 401, a wired home network device 402, a wireless healthcare device 403, a wireless IoT device 404, a smart grid device 405, a new wireless home network device 406, a wired IoT device 407, a personal computer (PC) 408, an integrated gateway 410, a TV 411, a wired healthcare device 412, and a new wired home network device 413.

In this case, the technical configuration and operation of the above devices except for the integrated gateway 410, the new wireless home network device 406 and the new wired home network device 413, that is, the technical configuration and operation of the wall pad 401, the wired home network device 402, the wireless healthcare device 403, the wireless IoT device 404, the smart grid device 405, the wired IoT device 407, the personal computer (PC) 408, the TV 411 and the wired healthcare device 412 are the same as the technical configuration and operation of the conventional devices installed in the main house, so the detailed description thereof will be omitted below.

The integrated gateway 410 relays the connection between a service server 100, the wired IoT devices 407, 412 and 413, the wireless IoT devices 403 to 406 and the personal computer PC 408 through an Internet 200, wirelessly communicates with the wireless devices through the wireless communication module 403, performs wire communication with the wired devices through the wired communication modules 428 and 429, and decodes the data received from the Internet 200 or the wireless devices 403, 404, 405 and the wired devices 412, 413, and 407 to transmit the decoded data to the TV 411.

The integrated gateway 410 includes a TV interworking module 427 that interworks with the TV 411 to display the received data on a screen and to provide a user interface (UI)/user experience (UX) through the screen; a wired/wireless router module 421 that connects a single wide area network (WAN) to a plurality of LAN ports, provides the plurality of LAN ports for physically connecting a plurality of computers with each other, and makes connection to a short-range wireless communication by using an access point (AP) function; and an IoT standard platform 427 that performs an IoT function based on an open IoT standard, supports a wired IoT function through an Ethernet as well as a short-range wireless IoT function, and interworks with the TV interworking module 427 to check an operational state of wired/wireless IoT devices and to change a setting of the wired/wireless IoT devices.

In addition, the integrated gateway 410 includes a home network interworking module 424 that communicates with a local server 300 through the Internet 200 to control a home network device installed in a main house, and connects a new home network device to the integrated gateway; a healthcare module that applies a Bluetooth health device profile (HDP) of an ISO/IEEE 11073 international standard to a built-in Bluetooth module to perform standard-based wireless communication with a healthcare device; and a smart grid module 426 that supports a smart grid function by applying a smart energy profile (SEP) to a built-in ZigBee module, checks in real time a power consumption of home appliances in the main house through the TV, and automatically transmits the power consumption of the home appliances to the service server to analyze the power consumption of a user.

In addition, the integrated gateway 410 includes a wireless communication module 423 for communicating with a wireless device through short-range wireless communication; and a USB port 428 and an RS-485 module 429 for communicating with a wired device connected through a wired connection.

The wireless communication module 423 may include a Wi-Fi communication module, a Bluetooth communication module, and a ZigBee communication module.

Hereinafter, the operation of the integrated gateway apparatus for implementing the smart home having the above configuration according to the present invention will be described in detail.

First, the local server 300 accesses the Internet 200 to transmit control commands generated from the service server 100 to the wall pad 401 in the integrated gateway apparatus 400. The operation of controlling the home network device 402 may be the same as that of the conventional smart home.

Since the wall pad 401 is installed in a built-in type, there is no way to physically connect the new home network devices 406 and 413 to the wall pad 401 and it is also impossible to install software that can drive the new home network devices 406 and 413 in the wall pad 401.

In addition, since the gateway or the wired/wireless router module 421 has no screen display function, the gateway or the wired/wireless router module 421 cannot provide its own service and has to transmit image data by using a display device such as a set-top box through the Internet 200. In this case, it is necessary to additionally provide the set-top box.

In order to solve such a disadvantage, according to the present invention, the integrated gateway 410 interworks with the TV 411 and a new home network device is connected to the built-in RS-485 port, so that the connection setting and control of the new home network device can be performed by manipulating a remote controller while viewing the TV. In addition, software for controlling the new home network device can be remotely received through the TV so that the software of the integrated gateway can be updated. To this end, an application for performing various functions as described above is previously installed in an internal memory of the integrated gateway 410.

Hereinafter, the operation of the present invention will be described in detail.

First, the TV interworking module 427 receives display data from the Internet 200, a wireless communication module (Bluetooth, Wi-Fi, or ZigBee) 423 or wired communication modules 428 and 429, and decodes the received display data in the form of high definition multimedia interface (HDMI) to transmit the HDMI display data to the TV 411. The TV 411 displays the HDMI display data received from the integrated gateway 410 on the screen. Thus, the data of the integrated gateway 410 is displayed on the screen. That is, the integrated gateway 410 can directly display the data through the TV 411 without connecting the PC or the notebook to the Internet 200. In this way, the integrated gateway 410 can directly provide the service by utilizing the TV 411 as a display device of the integrated gateway 410.

In particular, the TV interworking module 427 may provide the UI/UX for device control to support various services (healthcare services and the like) through the TV 411. To this end, a dedicated TV remote controller can be used. The functions of the wired/wireless router module 421 can be set and changed through the TV 411 by using the dedicated TV remote controller. As an example of various services, an on/off service for a device connected to the integrated gateway 410 may be provided.

Next, the wired/wireless router module 421 transmits data received through the Internet 200 to the wired IoT device 407 and the PC 408 via an LEN port by using a wired router function capable of connecting a single wide area network (WAN) port to a plurality of local area networks (LAN). In addition, the wired/wireless router module 421 provides a plurality of LAN ports capable of physically connecting a plurality of computers (PCs) (the number of LAN ports can be changed). Further, the wired/wireless router module 421 provides an access point (AP) function capable of connecting Wi-Fi communication. Thus, it is possible to connect the wireless home network device to the service server 100 through the Internet 200 by using the short-range wireless AP function.

In addition, the IoT standard platform 422 performs the IoT function by applying the open IoT standard such as oneM2M, AllJoyn of AllSeen Alliance, and IoTivity of open interconnect consortium (OIC). In particular, the IoT standard platform 422 supports the wired IoT function through the Ethernet as well as the wireless IoT function through Wi-Fi, Bluetooth, and ZigBee. Further, it is possible to check current status information of wired/wireless IoT devices and control the wired/wireless IoT devices by using the dedicated TV remote controller while viewing the TV 411. For example, it is possible to perform an ON/OFF function of a lighting lamp connected through the IoT, to check the operational state of a washing machine connected through the IoT and to change the setting of the washing machine. A user can control the IoT device connected to the integrated gateway 410 from the outside by using the IoT standard platform 422 with an application installed in a smart phone to control the IoT device.

The home network interworking module 424 communicates with the local server 300 through the Internet 200 to control existing home network devices installed in the main house. The local server 300 manages the home network devices connected to the wall pad 401 and installed in the local area. When a user newly purchases a home network device, the user can connect the home network device to the integrated gateway 410 to control the home network device. The new home network device cannot be added to the conventional wall pad and local server. Since the conventional wall pad is installed in a built-in type, there is no way to physically connect the new home network device to the wall pad and software for driving the new home network device cannot be installed in the wall pad. In order to solve such a disadvantage, the integrated gateway 410 connects the new wireless home network device 406 through the wireless communication module 423, and connects the new wired home network device 413 through the built-in RS-485 module 429 to install and control the home network devices through the home network interworking module 424. The RS-485 module 429 uses an RJ-45 connector proposed in the home network standard and adopts an RS-485 interface pin assignment for the standard home network proposed by Korea Telecommunication Technology Association (TTA). In order to install software for controlling new home network devices, applications for the new home network devices can be installed and software of the integrated gateway can be updated from the remote place by using the TV 411. The connection and control for the new wireless home network device 406 that operates wirelessly may be performed through the wireless communication module (ZigBee, Wi-Fi, or Bluetooth) 423 of the integrated gateway 410. It is possible to check and control the current state of the newly installed home network devices 406 and 413 as well as the existing home network devices installed in the main house through the TV 411 by using the dedicated TV remote controller. In particular, applications (App) for controlling the home network device by using a smart phone through the integrated gateway 410 can be provided to control the devices from the outside.

In addition, the healthcare module 425 performs standard-based wireless communication with the healthcare device by applying a Bluetooth health device profile (HDP) of the ISO/IEEE 11073 international standard to the built-in Bluetooth module. In addition, the healthcare module 425 performs standard-based wired communication with the healthcare device by applying a USB personal healthcare device class (PHDC) of the ISO/IEEE 11073 international standard. For example, the communication is performed to various wireless healthcare devices 403 through the wireless communication module 423 to obtain health information, and the communication is performed to the wired healthcare device 412 through the USB port 428 to obtain health information. In addition, a control command may be transmitted to each healthcare device as needed.

At this time, it is possible to view the measurement value of the wired/wireless healthcare device and to control the wired/wireless healthcare device through the TV by using the dedicated TV remote controller. It is also possible to automatically transmit the measurement value of the healthcare device to the service server 100 to provide a user-customized healthcare service such as chronic disease management. The data interface for the service server 100 communicates with the service server 100 based on the IoT standard through the IoT standard platform 422.

Finally, the smart grid module 426 supports the smart grid function by applying a smart energy profile (SEP) to the built-in ZigBee module. For example, the amount of power consumption of home appliances in the main house can be viewed in real time through the TV 411. In addition, IoT-based communication is performed with respect to the service server 100 through the IoT standard platform 422, and the power consumption of the home appliances is automatically transmitted to the service server 100 in real time or periodically, so that it is possible to analyze the power consumption of the user.

Although the invention made by the present inventors has been described in detail with reference to the embodiments, the present invention is not limited to the above embodiments, and various changes can be made without departing from the scope of the present invention.

### [Industrial applicability]

The present invention is applied to a smart home technology, in which an integrated gateway interworks with a TV to directly display data on the TV in real time and installs and controls a new home network device by using a dedicated remote controller while viewing the TV.

## Claims

1. An integrated gateway apparatus for implementing a smart home, the integrated gateway apparatus comprising:
an integrated gateway that serves as an intermediary for a connection among a service server, a wired Internet of things (IoT) device, a wireless IoT device, and a personal computer (PC) through an Internet; communicates with a wireless device through a wireless communication module; communicates with a wired device through a wired communication module; and decodes data received from the Internet or a wired/wireless device and transmits the decoded data to an interworking TV,
wherein the integrated gateway comprises a TV interworking module for allowing an interworking of a TV that displays the received data on a screen and provides a user interface (UI)/user experience (UX) on the screen.

2. The integrated gateway apparatus of claim 1, wherein the integrated gateway comprises a wired/wireless router module that connects a single wide area network (WAN) port to a plurality of local area network (LAN) ports, provides the plurality of LAN ports for physically connecting a plurality of computers with each other, and makes connection to a short-range wireless communication by using an access point (AP) function.

3. The integrated gateway apparatus of claim 1, wherein the integrated gateway comprises an IoT standard platform that performs an IoT function based on an open IoT standard, supports a wired IoT function through an Ethernet and a short-range wireless IoT function, and interworks with the TV interworking module to check an operational state of wired/wireless IoT devices and to change a setting of the wired/wireless IoT devices.

4. The integrated gateway apparatus of claim 1, wherein the integrated gateway comprises a home network interworking module for controlling a home network device installed in a main house by communicating with a local server through the Internet, and connecting a new home network device to the integrated gateway.

5. The integrated gateway apparatus of claim 1, wherein the integrated gateway comprises a healthcare module that applies a Bluetooth health device profile (HDP) of an ISO/IEEE 11073 international standard to a built-in Bluetooth module to perform standard-based wireless communication with a healthcare device and to perform wired communication with a wired healthcare device through a USB port to acquire health information.

6. The integrated gateway apparatus of claim 1, wherein the integrated gateway comprises a smart grid module that supports a smart grid function by applying a smart energy profile (SEP) to a built-in ZigBee module, checks in real time a power consumption of home appliances in a main house through the TV, and automatically transmits the power consumption of the home appliances to the service server to analyze the power consumption of a user.
